Europäisches Patentamt

European Patent Office

Office européen des brevets

(11) Veröffentlichungsnummer: **0 288 872**

**A2**

(19)

(12) **EUROPÄISCHE PATENTANMELDUNG**

(21) Anmeldenummer: 88106194.9

(51) Int. Cl.4: **H04N 7/137**

(22) Anmeldetag: **19.04.88**

(30) Priorität: **01.05.87 DE 3714589**

(43) Veröffentlichungstag der Anmeldung:
**02.11.88 Patentblatt 88/44**

(84) Benannte Vertragsstaaten:
**AT BE CH DE ES FR GB IT LI NL SE**

(71) Anmelder: **Standard Elektrik Lorenz Aktiengesellschaft**
**Lorenzstrasse 10**
**D-7000 Stuttgart 40(DE)**

(72) Erfinder: **Pirsch, Peter, Prof. Dr.**
**Schieferkamp 16**
**D-3000 Hannover 91(DE)**

(74) Vertreter: **Kugler, Hermann, Dipl.-Phys. et al**
**Standard Elektrik Lorenz AG Patent- und**
**Lizenzwesen Postfach 30 09 29**
**D-7000 Stuttgart 30(DE)**

(54) **Videosignal-Codierer mit DPCM und adaptiver Prädiktion.**

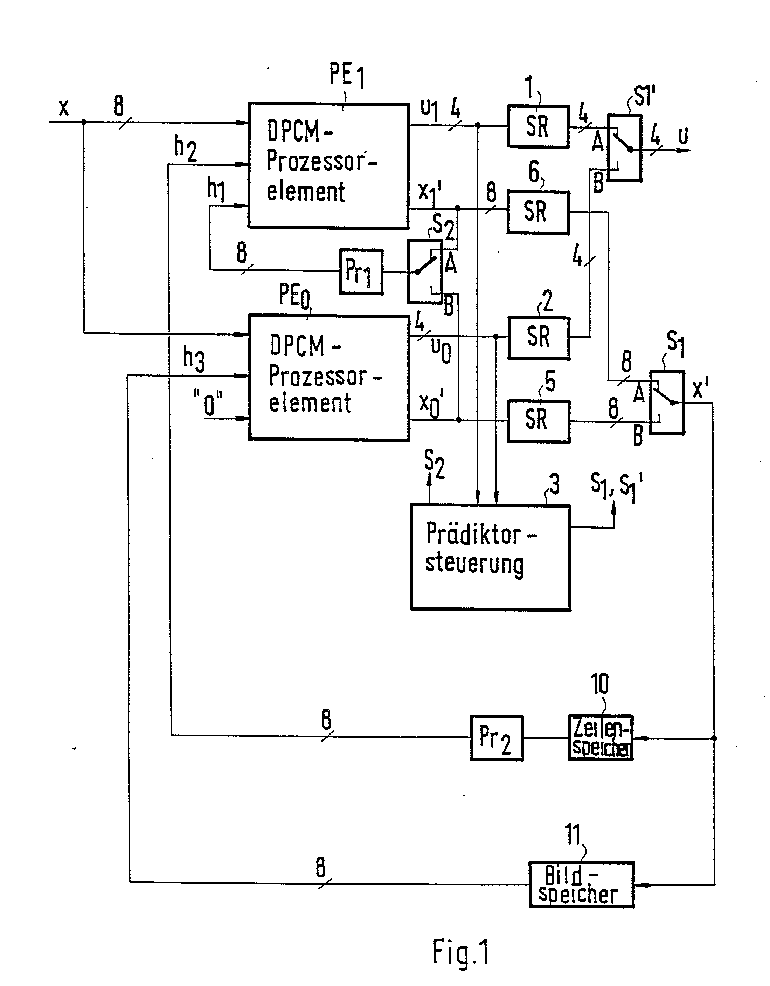

(57) Für eine Videosignal-Codiereinrichtung mit DPCM-Codierung mit adaptiver Prädiktion und blockweiser Umschaltung zwischen Codierern unterschiedlicher Prädiktion wird für den Fall, daß die Umschaltung zwischen einer Codierung mit zweidimensionalen Intraframe-Prädiktion und einer Codierung mit Interframe-Prädiktion stattfinden soll, eine Schaltungskonfiguration angegeben (Figur 1). Diese beruht darauf, daß einheitliche Orozessorelemente ($PE_1$, $PE_0$) mit Prädiktorschleifen ($Pr_1$, $Pr_2$, 10, 11) zusammenarbeiten und Mittel vorhanden sind, um nach dem Umschalten die geeigneten rekonstruierten Abtastwerte ($x_0'$, $x_1'$) weiterzuverwenden.

In einer Weiterbildung (Figur 5) findet die Entscheidung über den geeignetesten Codierer mit einer Verzögerung um einen Block statt, wodurch die maximale Verarbeitungsfrequenz deutlich erhölt ist. Es sind Mittel ($PE_2$, 12, 13, $S_3$, $S_4$, $S_4'$) vorhanden, die sicherstellen, daß auch bei dieser verzögerten Entscheidung beim Umschalten zwischen den einzelnen codierern die richtigen rekonstruierten Abtastwerte ($x_0'$, $x_1'$, $x_2'$) für die Prädiktion verwendet werden.

Fig.1

## Videosignal-Codierer mit DPCM und adaptiver Prädiktion

Die Erfindung betrifft eine Videosignal-Codiereinrichtung nach dem Oberbegriff des Patentanspruchs 1.

Eine derartige Einrichtung ist bekannt aus DE-C2 32 22 648 oder aus "Proceedings of the IEEE", VOL. 73, NO. 4, April 1985, Seiten 765 bis 772. Damit die Einrichtung hinsichtlich ihrer Prädiktion adaptiv arbeitet, wird dort blockweise zwischen verschiedenen Prädiktoren, d.h. zwischen verschiedenen durch ihre Prädiktoren unterschiedenen Codierern, umgeschaltet. Eine schaltungsmäßige Realisierung einer derartigen Codiereinrichtung ist nicht angegeben, insbesondere nicht für den Fall, daß die Umschaltung zwischen einem Codierer mit Interframe-Prädiktion und einem Codierer mit zweidimensionaler Intraframe-Prädiktion stattfindet.

Es ist daher die Aufgabe der Erfindung, für eine Codiereinrichtung der eingangs genannten Art mit Umschaltung zwischen einem DPCM-Codierer mit Interframe-Prädiktion und einem DPCM-Codierer mit zweidimensionaler Intraframe-Prädiktion die Konfiguration des Schaltungsaufbaus anzugeben.

Die Aufgabe wird wie im Patentanspruch 1 angegeben gelöst. Weiterbildungen ergeben sich aus den Unteransprüchen, wobei die Weiterbildungen nach den Ansprüchen 2 und 3 gegenüber der Grundkonfiguration nach dem Anspruch 1 den Vorteil haben, daß eine deutlich schnellere Signalverarbeitung möglich ist.

Die Erfindung wird nun anhand der Zeichnungen näher erläutert.

Es zeigen:

Figur 1 die Grundkonfiguration der erfindungsgemäßen Einrichtung,

Figur 2 die in Figur 1 und Figur 3 enthaltene mit DPCM-PE$_1$ bezeichnete Einheit am Beispiel eines an sich bekannten DPCM-Codierers mit zweidimensionaler Intraframe-Prädiktion, und

Figur 3 eine für eine schnellere Signalverarbeitung geeignete Weiterbildung der Einrichtung nach Figur 1.

Bei der Einrichtung nach Figur 1 werden mit x bezeichnete Abtastwerte eines Videosignals wie bei der bekannten Einrichtung in zwei parallel arbeitende DPCM-Codierer, die sich durch ihre Prädiktoren unterscheiden, zur Codierung eingegeben. Die Codierer werden später erläutert. Weiterhin wird ebenfalls wie beim Stand der Technik jeweils nach Codierung eines Blocks von Abtastwerten entschieden, ob die vom einen oder vom anderen Codierer gelieferten Ausgangswerte weiterverarbeitet werden. Die an den Ausgängen der beiden Codierer erscheinenden codierten Abtastwerte, die mit u$_0$ bzw. u$_1$ bezeichnet sind, werden, bis diese Entscheidung getroffen ist, für die Dauer eines Blocks in Zwischenspeichern 1 und 2 zwischengespeichert. Nachdem eine Prädiktorsteuerung 3 für diesen Block den günstigeren Codierer ermittelt hat, steuert sie einen Selektor-Schalter S1 so, daß er für diesen Block entsprechend dem als günstigeren ermittelten Codierer entweder die von dem einen Codierer codierten Abtastwerte u$_0$ oder die von dem anderen Codierer codierten Abtastwerte u$_1$ als zu übertragende codierte Abtastwerte u auswählt.

Soweit bisher beschrieben entspricht die Einrichtung der bekannten Codiereinrichtung.

Ein erstes Merkmal, das die erfindungsgemäße Einrichtung von der bekannten unterscheidet, ist, daß der eine DPCM-Codierer einen Intraframe-Prädiktor mit zweidimensionaler Prädiktion und der andere DPCM-Codierer einen Interframe-Prädiktor enthält. Wie noch erläutert wird, liefert der erstgenannte die codierten Abtastwerte u$_1$ und der an zweiter Stelle genannte die codierten Abtastwerte u$_0$.

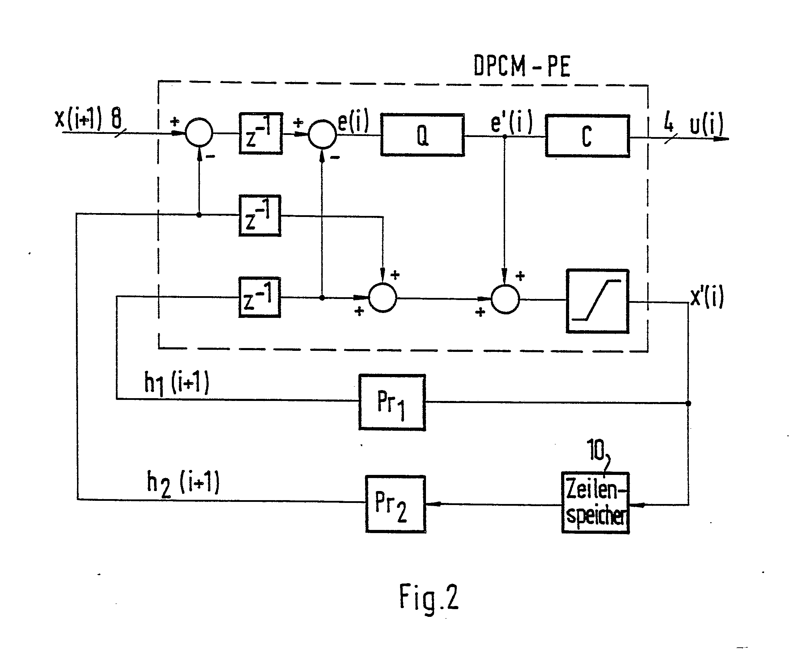

Ein weiteres Merkmal besteht darin, daß der DPCM-Codierer mit dem Intraframe-Prädiktor eine spezielle Ausgestaltung hat, nämlich diejenige, die aus der DE-A1 34 17 139, Figur 2, oder aus "Proceedings of the IEEE, VOL. 73, NO. 4, April 1985, Seiten 592 bis 598, Figur 4, bekannt ist.

Anhand der Figur 2 werden nun die wesentlichen Merkmale dieses DPCM-Codierers, soweit sie für die vorliegende Erfindung von Bedeutung sind, erläutert. Der bekannte Codierer nach Figur 2 hat zwei Prädiktorschleifen, in die die rekonstruierten Abtastwerte x' eingegeben werden. Die erste Prädiktorschleife enthält einen Prädiktor Pr$_1$, der einen Anteil h$_1$(i + 1) des für den zu codierenden Abtastwert x(i + 1) zu verwendeten Prädiktionswertes berechnet, und die zweite Prädiktorschleife enthält einen Zeilenspeicher und einen Prädiktor Pr$_2$, der einen Anteil h$_2$(i + 1) des zur Codierung eines Abtastwertes x(i + 1) zu verwendenden Prädiktionswert berechnet. Zur Berechnung des Anteils h$_1$(i + 1) verwendet der Prädiktor Pr$_1$ der ersten Prädiktionsschleife den rekonstruierten Abtastwert x'(i) des zuvor codierten Abtastwertes x(i). Zur Berechnung ihres Anteils h$_2$(i + 1) verwendet die zweite Prädiktorschleife rekonstruierte Abtastwerte der zuvor codierten Zeile. Deshalb enthält diese Schleife einen Zeilenspeicher 10, der die rekonstruierten Abtastwerte x' um eine Zeile verzögert, so daß für den Prädiktor Pr$_2$ bei der Codierung eines Abtastwerts x(i + 1) diejenigen rekonstruierten Abtastwerte aus der vorhergehenden Zeile zur Verfügung stehen, die er je nach Prädiktionsalgorithmus benötigt, um daraus die Funktion h$_2$(i + 1) zu bilden.

Der übrige Teil des Codierers nach Figur 2, der als DPCM-Prozessorelement bezeichnet werden kann, ist in Figur 2 gestrichelt umrahmt und mit DPCM-PE bezeichnet. Er verarbeitet nacheinander die beiden Anteile $h_2$ und $h_1$, enthält also dazu zwei parallele Eingänge für die beiden Anteile. Der Inhalt von DPCM-PE spielt für das Verständnis der vorliegenden Erfindung keine Rolle und wird daher nicht näher erläutert, zumal exakt die gleiche Darstellung wie in den genannten Schriften gewählt ist. Wesentlich ist lediglich noch, daß an einem zweiten Ausgang die codierten Abtastwerte u erscheinen.

Mit den in Figur 2 eingeführten Bezeichnungen von Schaltungsteilen läßt sich die erfindungsgemäße Anordnung nach Figur 1 wie folgt weiter beschreiben: Die beiden obengenannten DPCM-Codierer enthalten zwei exakt gleiche DPCM-Prozessorelemente $PE_1$ und $PE_0$, deren Inhalt durch DPCM-PE nach Figur 2 definiert ist. Zum Prozessorelement $PE_1$ gehört eine erste Prädiktorschleife mit dem Prädiktor $Pr_1$, die wie anhand von Figur 2 beschrieben den Anteil $h_1$ des Prädiktionswerts liefert und eine zweite Prädiktorschleife mit dem Zeilenspeicher 10 und dem Prädiktor $Pr_2$, die den Anteil $h_2$ des Prädiktionswerts liefert. $PE_1$ bildet zusammen mit diesen beiden Prädiktorschleifen also den DPCM-Codierer mit zweidimensionaler Intraframe-Prädiktion.

Der andere DPCM-Codierer, der mit Interframe-Codierung arbeitet, hat eine Prädiktorschleife, die einen Bildspeicher 11 enthält, an dessen Ausgang ein von einem Punkt des vorhergehenden Bildes abgeleiteter Prädiktionswert $h_3$ erscheint, der in das DPCM-Prozessorelement $PE_0$ eingegeben wird. (Der zweite Eingang dieses Elements bleibt, wie durch das "Nullsignal" angedeutet ist, unbeschaltet.)

Die von den beiden Prozessor-Elementen DPCM-$PE_0$ und DPCM-$PE_1$ rekonstruierten Abtastwerte $x_0'$ und $x_1'$ werden entsprechend den codierten Abtastwerten $u_0$ und $u_1$ in Zwischenspeichern (Schieberegistern) 5 und 6 zwischengespeichert, und am Ende eines Blocks von Abtastwerten gibt ein Selektorschalter $S_1$, je nachdem, welcher Codierer als der günstigere ermittelt worden ist, für diesen Block entweder die rekonstruierten Abtastwerte $x_0'$ oder $x_1'$ als rekonstruierte Abtastwerte $x'$ sowohl in den Zeilenspeicher 10 der zweiten Prädiktorschleife des Codierers mit der Intraframe-Prädiktion als auch in den Bildspeicher 11 der Prädiktorschleife des Codierers mit der Interframe-Prädiktion ein. Dieser Schalter $S_1$ wird genau entsprechend dem Schalter $S1'$ durch die Prädiktorsteuerung 3 gesteuert.

Wenn am Ende eines Blocks von Abtastwerten entschieden wird, daß der DPCM-Codierer mit dem Interframe-Prädiktor für diesen Block der günstigere war, so steuert die Prädiktorsteuerung 3 einen weiteren Selektorschalter $S_2$ so, daß dieser beim ersten Abtastwert des folgenden Blocks die Schalterstellung B einnimmt. Normalerweise befindet sich dieser Schalter $S_2$ in der Schalterstellung A, so daß die von DPCM-$PE_1$ rekonstruierten Abtastwerte $x_1'$ in die erste Prädiktorschleife von DPCM-$PE_1$ eingegeben werden. Bei Stellung B wird statt des am Ausgang von DPCM-$PE_1$ erscheinenden rekonstruierten Werts $x_1'$ der am Ausgang von DPCM-$PE_0$ erscheinende rekonstruierte Abtastwert $x_0'$ in die Prädiktionsschleife eingegeben. Dies stellt sicher, daß der DPCM-Codierer mit dem Intraframe-Prädiktor bei der Codierung des ersten Abtastwertes des folgenden Blocks tatsächlich denjenigen rekonstruierten Abtastwert zur Bildung von $h_1$ verwendet, der auch dem Empfänger bekannt ist.

Zur Schaltung nach Figur 1 ist noch folgendes zu bemerken: Die codierten Abtastwerte u, die in DPCM-$PE_1$ oder DPCM-$PE_0$ mit konstanter Länge codiert worden sind (Codierer C in Figur 2) werden vor der Übertragung in einem nicht gezeigten Codierer in Codewörter mit variabler Länge umcodiert.

Zur Ermittlung des günstigeren Codierers werden die codierten Abtastwerte $u_1$ und $u_0$ parallel eingegeben. Die Prädiktorsteuerung ermittelt die Anzahl der Bits, die bei der Umcodierung in Codewörter mit variabler Länge notwendig sind, dies für jeden Abtastwerts eines Blocks. Sie enthält einen Akkumulator, der für jeden der Codierer separat die so ermittelten Codewortlängen über einen Block akkumuliert, und einen Komparator, der am Ende eines Blocks die Ergebnisse vergleicht und dadurch zu Gunsten des einen oder anderen Codierers entscheidet.

Statt dieser Art der Ermittlung können auch andere Verfahren angewendet werden.

Die vorstehend beschriebene Schaltung macht es notwendig, daß die Entscheidung, welcher der beiden Codierer der günstigere ist, in der Zeitspanne vom letzten Abtastwert eines Blocks bis zum ersten Abtastwert des darauffolgenden Blocks, also innerhalb nur einer einzigen Abtastperiode getroffen werden muß. Dies beschränkt die maximale Arbeitsgeschwindigkeit der Codiereinrichtung nach Figur 1.

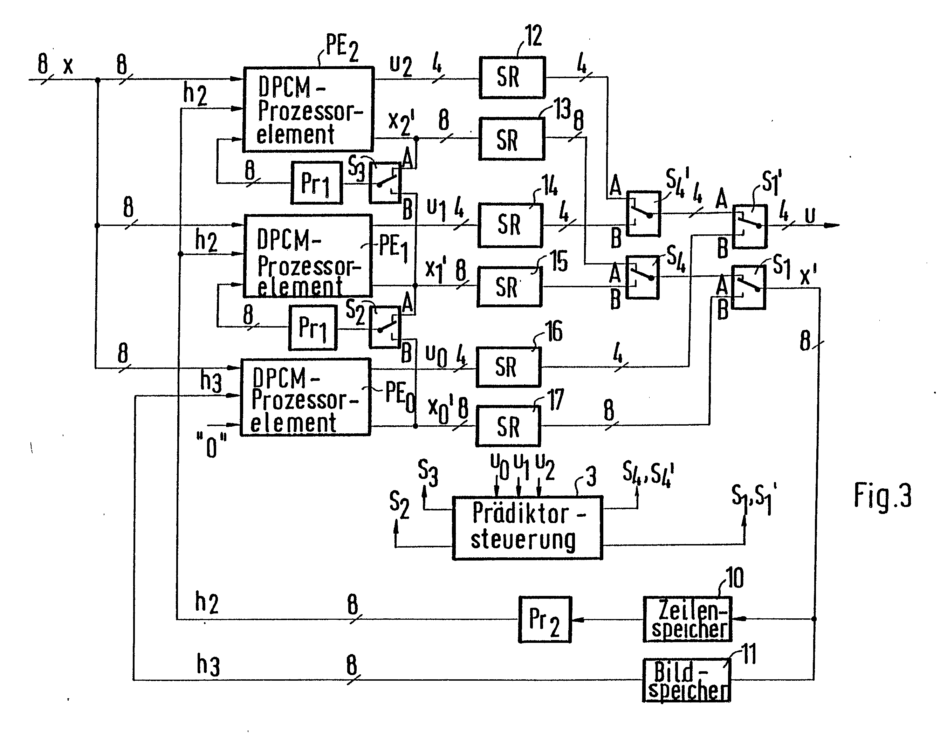

Anhand von Figur 3 wird daher eine Weiterbildung beschrieben, die eine erheblich schnellere Verarbeitung ermöglicht.

Der wesentliche Unterschied der Einrichtung nach Figur 3 gegenüber der Einrichtung nach Figur 1 besteht darin, daß die Prädiktorsteuerung über den zur Codierung eines Blocks geeigneten DPCM-Codierer erst am Ende des darauffolgenden Blocks entscheidet.

Falls beispielsweise ein Block eine Länge von 9 Abtastwerten hat, so steht für die Ermittlung des günstigeren Codierers und die davon abhängige Ansteuerung der Schalter eine Zeit von 9 Abtastperioden zur Verfügung. Dies bedeutet, daß die den Ausgängen der Prozessorelemente nachgeschalteten Zwischenspeicher eine Verzögerung von 2 Blocklängen bewirken müssen.

Während der n-te Block codiert wird und die Ausgangswerte der Prozessorelemente in die Zwischenspeicher eingegeben werden, werden, wie oben beschrieben, die Codewortlängen für jeden der Codierer akkumuliert. Nach Codierung des n-ten Blocks geschieht dasselbe mit dem $(n+1)$-ten Block und es wird, während dieser Block codiert wird, darüber entschieden, welcher Codierer für den n-ten Block der günstigere war. Am Ende der Codierung des $(n+1)$-ten Blocks werden, entsprechend der getroffenen Entscheidung, wie oben beschrieben, die codierten Abtastwerte und rekonstruierten Abtastwerte entweder des Codierers mit der Intraframe-Prädiktion oder des Codierers mit der Interframe-Prädiktion zum Ausgang bzw. zur Weiterverarbeitung durchgeschaltet.

Infolge der bei der Einrichtung nach Figur 3 wie vorstehend beschrieben stattfindenden verzögerten Entscheidung ist ein erhöhter Schaltungaufwand vorhanden, um sicherzustellen, daß auch bei dieser verzögert stattfindenden Umschaltung in jedem Falle diejenigen rekonstruierten Abtastwerte zur Weiterverarbeitung verwendet werden, die den ausgewählten codierten Abtastwerten entsprechen, da nur diejenigen Werte auch im Empfänger rekonstruiert werden können. Die Einrichtung nach Figur 3 hat dieselbe Grundkonfiguration wie die Einrichtung nach Figur 1, lediglich einen die verzögerte Entscheidung bedingten Zusatz-Schaltungsaufwand, der nachstehend beschrieben wird.

Die Einrichtung nach Figur 3 hat wie die nach Figur 1 einen DPCM-Codierer mit Interframe-Prädiktion, bestehend aus dem Prozessorelement $PE_0$ und der Prädiktorschleife mit dem Bildspeicher 11, und einen DPCM-Codierer mit zweidimensionaler Intraframe-Prädiktion, bestehend aus dem Prozessorelement $PE_1$ und den zwei Prädiktorschleifen, die erste mit dem Prädiktor $Pr_1$ und die zweite mit dem Prädiktor $Pr_2$ und dem Zeilenspeicher 10.

Zusätzlich ist ein zweiter DPCM-Codierer mit zweidimensionaler Intraframe-Prädiktion vorhanden, bestehend aus dem Prozessorelement $PE_2$, einer ersten Prädiktorschleife, die einen Prädiktor $Pr_1$ enthält und vom Ausgang von $PE_2$, an dem die rekonsturierten Abtastwerte $x_2'$ erscheinen, zu einem seiner Eingänge führt, und einer zweiten Prädiktorschleife, die er mit dem Prozessorelement $PE_1$ des anderen Codierers gemeinsam hat, nämlich die Prädiktorschleife mit dem Prädiktor $Pr_2$ und dem Zeilenspeicher 10. Sämtliche Prozessorelemente $PE_0$, $PE_1$ und $PE_2$ sind untereinander

gleich, ebenso die Prädiktoren $Pr_1$ in den ersten Prädiktorschleifen von $PE_1$ und $PE_2$. In diesen Prädiktorschleifen befinden sich Schalter $S_2$ und $S_3$, deren Funktion an späterer Stelle erläutert wird.

Den Ausgängen der Prozessorelemente sind Zwischenspeicher 12 bis 17 nachgeschaltet, in die die codierten Abtastwerte $u_2$, $u_1$, $u_0$ und die rekonstruierten Abtastwerte $x_2'$, $x_1'$, $x_0'$ der drei parallel arbeitenden Codierer eingespeichert und dort, wie oben erläutert, um zwei Blocklängen verzögert werden. An den Ausgängen der Codiereinrichtung befinden sich wie bei der nach Figur 1 ebenso wie dort bezeichnete Selektorschalter $S_1$ und $S_1'$, die für einen Block von codierten Abtastwerten je nach getroffener Entscheidung entweder die codierten Abtastwerte und rekonstruierten Abtastwerte eines der DPCM-Codierer mit Intraframe-Prädiktion oder die entsprechenden Werte des DPCM-Codierers mit Interframe-Prädiktion zum Ausgang bzw. zur Weiterverarbeitung durchschalten (Schalterstellung A oder Schalterstellung B).

Zwischen den Ausgängen der Zwischenspeicher 12, 14 und dem einen Eingang des Schalters $S_1'$ liegt ein weiterer Auswählschalter $S_4'$, und zwischen den Ausgängen der Zwischenspeicher 13, 15 und dem einen Eingang des Selektorschalters $S_1$ liegt ein weiterer Auswählschalter $S_4$. Diese beiden Auswählschalter $S_4$ und $S_4'$ treffen, für den Fall, daß für einen Block zugunsten einer Codierung mit der zweidimensionalen Intraframe-Prädiktion entschieden wird, eine Vorauswahl zwischen den Ausgangswerten von $PE_1$ und denen von $PE_2$. Nachstehend wird die Funktion der Schalter $S_2$ und $S_3$ erläutert. Diese Schalter sollen dafür sorgen, daß der Prädiktionsanteil $h_1$, der von dem rekonstruierten Abtastwert des zuvor codierten Abtastwerts abgeleitet wird, auch bei der Umschaltung zwischen den Codierern vom "richtigen" rekonstruierten Abtastwert, d.h. von dem, der auch tatsächlich dem ausgewählten codierten Abtastwert entspricht, abgeleitet wird. Hierzu steuert die Prädiktorsteuerung den ersten Schalter $S_2$ so, daß er regelmäßig bei jedem ersten Abtastwert eines Blocks nur für die Dauer dieses Abtastwerts statt der Normalstellung A die Schalterstellung B einnimmt. Somit wird zu jedem Blockanfang statt des normalerweise im Prädiktor $Pr_1$ verwendeten Wertes $x_1'$ der rekonstruierte Wert $x_0'$ der Prädiktion zugrundegelegt. Dies geschieht wie gesagt regelmäßig und unabhängig von irgendeiner in der Prädiktorsteuerung getroffenen Entscheidung.

Im Gegensatz hierzu wird der Schalter $S_3$ von der Prädiktorsteuerung so gesteuert, daß er bei ersten Abtastwerten eines Blocks nur unter einer bestimmten Bedingung von seiner Normalstellung A in die Stellung B übergeht.

Die Bedingung ist wie folgt: Beim ersten Abtastwert des n-ten Blocks bleibt der Schalter $S_3$ in der Normalstellung A, wenn entschieden wurde, daß für den (n-2)-ten Block die Codierung mit der Intraframe-Prädiktion die günstigere war. Der Schalter $S_3$ geht für die Dauer dieses ersten Abtastwertes des n-ten Blocks dann in die Stellung B, wenn entschieden wurde, daß für den (n-2)-ten Block die Codierung mit dem Interframe-Prädiktor die günstigere war. Diese Entscheidung, welche Codierung für den (n-2)-Block die günstigere war, wird spätestens am Ende des (n-1)-ten Blocks getroffen. Für den Fall, daß für den aktuellen Block, den n-ten Block, eine Codierung mit Intraframe-Prädiktion am günstigsten ist, hat somit einer von den beiden "Intraframe-Prädiktorelementen" $PE_1$ und $PE_2$ die korrekten Werte für x', entweder $PE_1$ mit dem Wert $x_0$ oder $PE_2$ mit dem Wert $x_1'$.

Folgendes Beispiel soll die Funktion der beiden Schalter noch näher erläutern: Bei Einschalten der Codiereinrichtung ist nur die Codierung mit der Intraframe-Prädiktion sinnvoll, da ein vorhergehendes Bild noch nicht zur Verfügung steht. Die Schalter $S_1$, $S_1'$, $S_4$, $S_4'$ und der Schalter $S_3$ bleiben also vorerst in der Stellung A, lediglich der Schalter $S_2$ geht bei jedem ersten Abtastwert eines Blocks für die Dauer dieses Abtastwerts in die Stellung B. Irgendwann, am Ende eines n-ten Blocks entscheidet die Prädiktorsteuerung, daß für den (n-1)-Block die Codierung mit Inter-Frame-Prädiktion die günstigere war. Diese Entscheidung löst folgende Schaltvorgänge aus:

- Für die Dauer der Codierung des (n+1)-Blocks gehen die Schalter $S_1$ und $S_1'$ in die Stellung B, so daß während der Codierung des (n+1)-ten Blocks die von $PE_0$ erzeugten Abtastwerte $u_0$ und die rekonstruierten Abtastwerte $x_0'$ aus den Zwischenspeichern 16 und 17 als Werte u bzw. x' für den (n-1)-ten Block zur Weiterverarbeitung weitergeleitet werden.

- In der Prädiktorsteuerung ist jetzt klar, daß für den n-ten Block die Ausgangswerte von $PE_2$ nicht als die Richtigen in Frage kommen, da nur $PE_1$ am Blockanfang den richtigen Wert $x_0'$ hatte. Infolgedessen braucht die Prädiktorsteuerung (während der Codierung des (n+1)-ten Blocks) das Ergebnis von $PE_0$ nur mit dem von $PE_1$ zu vergleichen.

- Der Schalter $S_3$ geht für die Codierung des ersten Abtastwerts des (n+1)-ten Blocks in die Schalterstellung B, weil, wie vorstehend gesagt, für den n-ten Block jetzt feststeht, daß $PE_2$ nicht geeignet war, sondern $PE_1$, falls überhaupt die Codierung mit der Intraframe-Codierung sich als die günstigere erweisen wird.

Wird nun am Ende des (n+1)-ten Blocks entschieden, daß von den beiden für den n-ten Block in Frage kommenden Prozessorelementen $PE_0$ und $PE_1$, das Prozessorelement $PE_1$ für diesen n-ten Block das günstigere war, so gehen die Schalter $S_1$ und $S_1'$ für die Dauer des (n+2)-ten Blocks wieder in die Stellung A, damit die von $PE_1$ erzeugten Werte $u_1$ und $x_1'$ für den n-ten Block zur Weiterverarbeitung weitergeleitet werden, und die Schalter $S_4$ und $S_4'$ gehen gleichzeitig in die Stellung B.

Würde im Gegenteil hierzu am Ende des (n+1)-ten Blocks entschieden, daß von den beiden für den n-ten Block in Frage kommenden Prozessorelementen $PE_1$ und $PE_0$ das Prozessorelement $PE_0$ das günstigere ist, so würden für die Dauer der Codierung des (n+2)-ten Blocks die Schalter $S_1$ und $S_1'$ in die Stellung B gehen (Die Stellung der Schalter $S_4$ und $S_4'$ wäre damit gleichgültig.), damit für diesen n-ten Block die von $PE_0$ gelieferten Werte $u_0$ und $x_0'$ während der Codierung des (n+2)-ten Blocks zur Weiterverarbeitung weitergegeben werden.

Nur im letzteren dieser beiden Fälle würde der Schalter $S_3$ beim ersten Abtastwert des (n+2)-ten Blocks von seiner Normalstellung A in die Stellung B gehen.

Die vorstehend beschriebene Codiereinrichtung nach Figur 3 hat gegenüber der Einrichtung nach Figur 1 zwar einen erhöhten Logikaufwand, jedoch kann durch die aufgezeigte Parallelstruktur der Prozessorelement der Codierer ein sicheres Funktionieren der DPCM-Codierung mit blockweise umschaltbaren Codierern erreicht werden.

Wie bei der Prädiktorsteuerung 3 angedeutet, werden der Entscheidung die codierten Abtastwerte $u_0$, $u_1$, $u_2$ zugrunde gelegt, wobei wie oben beschrieben für jeden dieser Werte die zur Codierung mit variabler Codewortlänge notwendige Anzahl von Bits über die Dauer eines Blocks aufakkumuliert und abhängig von der am Blockende erreichten Summe die Entscheidung getroffen wird. Prinzipiell sind auch andere Umschaltkriterien und auch beliebige Blockgrößen, wobei ein Block auch nur aus einem einzigen Abtastwert bestehen kann, anwendbar.

Bei der vorstehend beschriebenen Einrichtung wird nur zwischen zwei durch ihre Prädiktoren (Intraframe oder Interframe) unterschiedenen DPCM-Codierern umgeschaltet. Das beschriebene Prinzip kann aber auch auf Umschaltungen zwischen mehr als zwei verschiedenen DPCM-Codierern übertragen werden. Dabei hängt die Anzahl M der parallel zu schaltenden Prozessorelemente von der Anzahl N der verschiedenen Prädiktoren, der Anzahl $N_l$ von Prädiktoren, die einen vom vorausgegangenen Abtastwert abhängigen Prädiktionsanteil haben, und von der Anzahl K ab, die angibt, wieviele Blöcke wegen der verzögerten Entscheidung zusätzlich zwischengespeichert müssen. Es gilt:

$$M = \left( (N - N_I) \sum_{j=0}^{K} N_I^{\,j} \right) + N_I^{\,K+1}.$$

Bei der Einrichtung nach Figur 3 ist:

- N = 2, weil zwei verschiedene Prädiktoren (Intraframe und Interframe) vorhanden sind,
- $N_I$ = 1, weil nur einer der Prädiktoren (der Intraframe-Prädiktor) einen vom vorhergegangenen Abtastwert abhängigen Prädiktionsanteil hat,
- K = 1, weil durch die verzögerte Entscheidung ein Block zwischengespeichert werden muß.

Zu der erfindungsgemäßen Einrichtung ist noch folgendes zu bemerken:

- Da bei der Einrichtung nach Figur 3 die Entscheidung über den geeignetsten Codierer die zeitkritische Schleife nicht belastet, sondern unabhängig vom Funktionieren der Schleife verzögert in einem getrennt ablaufenden Prozeß stattfindet, kann die Einrichtung mit einer Taktfrequenz bis zu 14,7 MHz betrieben werden, wogegen bei der Einrichtung nach Figur 1 die Taktfrequenz maximal nur 7,2 MHz betragen kann.
Diese Taktfrequenzen wurden für Schaltkreise in 2 μm-CMOS-Technologie" errechnet.

- Das Prozessorelement $PE_0$ ist wie die anderen Prozessorelemente in der Lage, zwei Prädiktionswert-Anteile zu verarbeiten, obwohl nur ein Prädiktionswert $h_3$ zu verarbeiten ist. Wie Figur 2 zeigt, ist es nur ein kleiner Teil, nämlich ein Subtrahierer und zwei Verzögerungsglieder, der dadurch überflüssig ist, so daß es gerechtfertigt ist, im Sinne einer günstigen Fertigung einer einheitlichen Auslegung der Prozessorelemente den Vorzug zu geben.

- Die mehrfach vorhandenen einheitlichen Prozessorelemente bedeuten keinen allzugroßen Schaltungsaufwand, da sie nur einfache Elemente wie Addierer, Subtrahierer, Verzögerungsglieder mit einer Verzögerung von nur einer Taktperiode und keine großen Speicher und Logikschaltungen enthalten. Die Prädiktorschleifen mit großen Speichern, Bildspeicher 11 und Zeilenspeicher 10 und die Prädiktorsteuerung 3 sind nur einmal vorhanden, so daß der Gesamtaufwand der Schaltung in Anbetracht der sehr hohen möglichen Verarbeitungsgeschwindigkeit sich rechtfertigt.

- Die beschriebenen Codiereinrichtungen sind nur für die Sendeseite eines Übertragungssystem ausgelegt. Wie bei bekannten adaptiven DPCM-Codierern muß durch irgendeine Zusatzinformation dem Empfänger mitgeteilt werden, welcher Codierer sendeseitig gerade eingeschaltet ist.

- Die erfindungsgemäße Codiereinrichtung, sowohl die nach Figur 1 und auch die nach Figur 3, ist prinzipiell zur Codierung sowohl des Luminanzsignals als auch des Chrominanzsignals einsetzbar. Notwendig erscheint sie derzeit nur zur Codierung des Luminanzsignals.

- Wie in den Zeichnungen durch die bei den Leitungen angegebenen Zahlen angedeutet, werden sämtliche Werte mit 8 Bits dargestellt und parallel verarbeitet, mit Ausnahme der codierten Werte u, die bei dem gezeigten Beispiel jeweils mit 4 Bits codiert werden. Die Anzahl der Bits für u gängt von der Stufenzahl des im Prozessorelement vorhandenen Quantisierers (Q, Fig. 2) ab.

## Ansprüche

1. Einrichtung zum Codieren einer Folge von digitalen Videosignal-Abtastwerten nach dem Verfahren der DPCM mit adaptiver Prädiktion, mit mehreren DPCM-Codierern, die unterschiedlich arbeitende Prädiktoren haben und die zu verarbeitenden Abtastwerte parallel verarbeiten, und mit einer Prädiktorsteuerung, die jeweils nach Verarbeitung eines Blocks von aufeinanderfolgenden Abtastwerten, entscheidet, welcher DPCM-Codierer für diesen Block der geeignetste war und dann für diesen Block die mit dem geeignetsten DPCM-Codierer codierten Abtastwerte zum Ausgang durchschaltet, **dadurch gekennzeichnet,**
- daß einer ($PE_1$) der DPCM-Codierer einen Intraframe-Prädiktor mit zweidimensionaler Prädiktion und ein anderer ($PE_0$) einen Interframe Prädiktor enthält,
- daß der DPCM-Codierer ($PE_1$) mit dem Intraframe-Prädiktor wie an sich bekannt eine erste und eine zweite Prädiktorschleife hat, wobei
  -jede einen Anteil ($h_1$, $h_2$) des Prädiktionswertes berechnet,
  -der DPCM-Codierer diese Anteile nacheinander verarbeitet,
  -die erste Prädiktorschleife ($Pr_1$, $S_2$, $Pr_2$, $S_3$) zur Berechnung ihres Anteils ($h_1(i+1)$) den rekonstruierten Abtastwert ($x'(i)$) des zuvor codierten Abtastwertes ($x(i)$) verwendet, und
  -die zweite Prädiktorschleife ($Pr_2$, 10) zur Berechnung ihres Anteils ($h_2(i+1)$) rekonstruierte Abtastwerte der zurvor condierten Zeile verwendet,
- daß ein erster Schalter ($S_1$) vorhanden ist, den

die Prädiktorsteuerung (3) so steuert, daß er jeweils für einen Block die von demjenigen DPCM-Codierer rekonstruierten Abtastwerte ($x_0'$, $x_1'$, $x_2'$) in die zweite Prädiktorschleife ($Pr_2$, 10) des DPCM-Codierers ($PE_1$, $PE_2$) mit dem Intraframe-Prädiktor und in die Prädiktorschleife (11) des DPCM-Codierers ($PE_0$) mit dem Interframe-Prädiktor eingibt, der für diesen Block als geeigneter Codierer ausgewählt wird,

- und daß ein zweiter Schalter ($S_2$) vorhanden ist, den die Prädiktorsteuerung (3) so steuert, daß er

-wenn die Prädiktorsteuerung (3) nach Codierung eines Blocks von Abtaswerten entscheidet, daß der DPCM-Codierer ($PE_0$) mit dem Interframe-Prädiktor der geeignet war, beim ersten Abtastwert des folgenden Blocks den von diesem DPCM-Codierer ($PE_0$) rekonstruierten Abtastwert ($x_0'$) in die erste Prädiktorschleife des DPCM-Codierers ($PE_1$) mit dem Intraframe-Prädiktor statt des normalerweise von diesem Codierer ($PE_1$) rekonstruierten Abtastwertes ($x_1'$) eingibt.

2. Einrichtung nach Anspruch 1, dadurch gekennzeichnet,

- daß für jeden der DPCM-Codierer ($PE_0$, $PE_1$) Zwischenspeicher (14, 15, 16, 17) vorhanden sind, in die die codierten Abtastwerte ($u_0$, $u_1$) sowie die rekonstruierten Abtastwete ($x_0'$, $x_1'$) von Ausgängen der DPCM-Codierer ($PE_0$, $PE_1$) eingespeichert werden, und

- daß die Prädiktorsteuerung über den zur Codierung eines Blocks geeigneten DPCM-Codierer erst am Ende des darauffolgenden Blocks entscheidet.

3. Einrichtung nach Anspruch 2, dadurch gekennzeichnet,

- daß ein zweiter DPCM-Codierer ($PE_2$) mit einem Intraframe-Prädiktor vorhanden ist, der parallel zu den genannten DPCM-Codierern ($PE_0$, $PE_1$) die zu verarbeitenden Abtastwerte verarbeitet, dessen Ausgängen Zwischenspeicher (12, 13) zum Einspeichern der codierten Abtastwerte ($u_2$) und rekonstruierten Abtastwerte ($x_2'$) nachgeschaltet sind, und der ebenso wie der erste DPCM-Codierer ($PE_1$) mit Intraframe-Prädiktor eine erste Prädiktorschleife ($Pr_1$, $S_3$) und eine zweite Prädiktorschleife ($Pr_2$, 10) hat, wobei er die zweite Prädiktorschleife mit dem ersten DPCM-Codierer ($PE_1$) gemeinsam hat,

- daß die Prädiktorsteuerung (3) den genannten zweiten Schalter ($S_2$) so steuert, daß er regelmäßig beim ersten Abtastwert jedes zu codierenden Blocks den von dem DPCM-Codierer ($PE_0$) mit Interframe-Prädiktor rekonstruierten Abtastwert ($x_0'$) statt des normalerweise von dem ersten DPCM-Codierer ($PE_1$) mit Intraframe-Prädiktor rekonstruierten Abtastwerts ($x_1'$) in dessen erste Prädiktionsschleife eingibt,

- daß ein dritter Schalter ($S_3$) vorhanden ist, den die Prädiktorsteuerung (3) so steuert, daß er,

-wenn am Ende eines Blocks entschieden wird, daß für den vorhergegangenen Block der DPCM-Codierer ($PE_0$) mit dem Interframe-Prädiktor der geeignete war, beim ersten Abtastwert des folgenden Blocks den von dem ersten DPCM-Codierer ($PE_1$) mit Intraframe-Prädiktor rekonstruierten Abtastwert ($x_1'$) in die erste Prädiktorschleife des zweiten DPCM-Codierers ($PE_2$) statt des normalerweise von diesem Codierer ($PE_2$) rekonstruierten Abtastwertes ($x_2'$) eingibt, und

- daß vierte Schalter ($S_4$, $S_4'$) vorhanden sind, die von der Prädiktorsteuerung (3) so gesteuert werden, daß sie, für den Fall einer Enscheidung zugunsten eines der beiden DPCM-Codierer ($PE_1$, $PE_2$) mit Intraframe-Prädiktor, entweder die von dem ersten ($PE_1$) oder die von dem zweiten DPCM-Codierer ($PE_2$) codierten Abtastwerten ($u_1$, $u_2$) und rekonstruierten Abtastwerte ($x_1'$, $x_2'$) weiterleiten.

4. Einrichtung nach einem der Vorstehenden Ansprüche, dadurch gekennzeichnet, daß die Prädiktorseuerung (3) zur Ermittlung des für einen Block von Abtastwerten geeignetsten DPCM-Codierers für die von den verschiedenen DPCM-Codierern codierten Abtastwerte ($u_0$, $u_1$, $u_2$) die zur Codierung mit variabler codewortlänge erforderlichen Bitznzahl getrennt nach Codierer über die Dauer des Blocks aufaddiert und dann die Entscheidung zugunsten des DPCM-Codierers trifft, dessen codierte Abtastwerte ($u_0$, $u_1$, $u_2$) am Blockende die geringste Summe ergeben haben.

5. Einrichtung nach einem der vorstehenden Ansprüche, dadurch gekennzeichnet, daß die DPCM-Codierer gleiche DPCM-Prozessorelemente ($PE_0$, $PE_1$, $PE_2$) enthalten und daß ein solches DPCM-Prozessorelement der oben genannte an sich bekannte DPCM-Codierer mit zweidimensionaler Intraframe-Prädiktion ohne die Prädiktionsschleifen ist und daher Eingänge für den zu codierenden Abtastwert ($x(i+1)$), die Anteile ($h_1(i+1)$, $h_2(i+1)$) des dafür zu verwendenden Prädiktionswertes und Ausgänge für den zuvor codierten Abtastwert ($u(i)$) und dessne rekonstruierten Abtastwert ($x(i)$) hat.

Fig.1

P.Pirsch 5
29 . 9 .87

0 288 872

DPCM – PE

Fig.2

P. Pirsch 5
29.9.87

Fig.3

0 288 872

P. Pirsch 5
29. 9. 87